(19) **Europäisches Patentamt / European Patent Office / Office européen des brevets**

(11) **EP 2 267 655 A2**

(12) **EUROPEAN PATENT APPLICATION**

(43) Date of publication:
   **29.12.2010 Bulletin 2010/52**

(51) Int Cl.:
   ***G06T 5/40*** *(2006.01)*    ***H04N 5/243*** *(2006.01)*

(21) Application number: **10165001.8**

(22) Date of filing: **04.06.2010**

(84) Designated Contracting States:
   **AL AT BE BG CH CY CZ DE DK EE ES FI FR GB GR HR HU IE IS IT LI LT LU LV MC MK MT NL NO PL PT RO SE SI SK SM TR**
   Designated Extension States:
   **BA ME RS**

(30) Priority: **26.06.2009 JP 2009152872**

(71) Applicant: **Canon Kabushiki Kaisha Tokyo 146-8501 (JP)**

(72) Inventor: **Omi, Hiroyuki Tokyo (JP)**

(74) Representative: **Derham, Cassandra Virginie Canon Europe Ltd European Patent Department 3 The Square Stockley Park Uxbridge, Middlesex UB11 1ET (GB)**

(54) **Image processing method and image processing apparatus**

(57)   An image processing apparatus for performing tone conversion on an image imaged by an X-ray imaging system extracts a reference region that is to serve as a reference for the image, and, if there is a change in the image, performs tone conversion so as to suppress variation in contrast resulting from the change in the image in the extracted reference region, and so as to reflect variation in the contrast in the remaining region.

**F I G. 2**

EP 2 267 655 A2

**Description**

BACKGROUND OF THE INVENTION

Field of the Invention

The present invention relates to an X-ray image processing method for transforming an X-ray image into an output image with optimal tones. More specifically, the present invention relates to an image processing method (i.e. a tone-mapping method) and an image processing apparatus for creating a tone conversion curve to define the contrast of the output image, the created tone conversion curve incorporating at least in part a tone conversion curve of a previous image.

Description of the Related Art

With X-ray images, various types of tone conversion have been proposed in order to improve an output version of the input X-ray images, in an attempt to improve diagnostic performance by physicians. Tone conversion that optimizes an observation region of the X-ray image is performed to improve the diagnostic performance by physicians. To perform this optimisation, extraction of an observation region from the X-ray image that is more robust to noise and motion has been proposed. A sigmoid function has been used as a tone curve to optimize the output image of this region. When an X-ray image is captured as a moving image (made up of a sequence of frames), it is further necessary to take into account and stabilize a variation in contrast between these frames. Contrast variation between frames arises as a result of X-ray variation and object variation. X-ray variation refers to variability in the amount of X-rays that are produced even under constant imaging conditions, and to changes in imaging conditions because of X-ray manipulation or control. Object variation may refer, for instance, to the lung field moving in and out of the imaging region as a result of breathing, or to the injection of a contrast dye.

Heretofore, this variation in contrast between frames caused by differences in the amount of X-rays has been addressed by better stabilizing the X-rays. On the other hand, object variation has been addressed by a method of analysing objects or by controlling the tone conversion curve.

Example methods of analyzing objects include a method that involves creating histograms from pixel values of input images, extracting minimum and maximum values, and filtering these values temporally (e.g., see Japanese Patent No. 3334321). Filtering the minimum and maximum values temporally enables sensitivity to contrast variation to be suppressed and stabilized.

Example methods for controlling tone conversion include a method that involves detecting a scene change by analysing an input image, and merging a newly created tone conversion curve with a past tone conversion curve based on the time required for the scene change (e.g., see Japanese Patent No. 4050547). According to this method, sensitivity to contrast variation can be suppressed and stabilized by temporally filtering tone conversion curves.

However, the following problems exist with the above conventional technology. Even if contrast variation over the image as a whole is suppressed by filtering the minimum and maximum values of histograms (the minimum and maximum values representing particularly dark and particularly bright areas), variation in the region being closely observed cannot be suppressed, and this is acutely felt by the user (such as the physician who is using the output image for diagnostic purposes). Attempts to suppress variation in the observation region in response to this have resulted in saturation and clipping because of an inability to demonstrate a variation in contrast in the moving image, and to create an output image best suited for the input frame.

A method that suppresses contrast variation in the region being closely observed while demonstrating contrast variation over the image as a whole is desired. Furthermore, there are many instances where, in the case where the tone conversion curve is controlled based on the time required for a scene change within the image sequence, it is desirable to control the variation in contrast irrespective of the time required for that scene change.

SUMMARY OF THE INVENTION

It is desirable to provide an apparatus and method that obtain optimal tones with every moving image frame (within a series of frames or images making up the moving image), while obtaining stable tones by suppressing flicker in the moving image. It is also desirable to provide an apparatus and method that reflect (i.e. take into account) contrast variation of every frame, while creating images of the observation region that do not feel unnatural. It is desirable to provide an apparatus and method that obtain optimal tones in a series of time-sequenced frames or simultaneous frames that have different luminance or contrast levels, or even in a single image that has high luminance areas that cause a viewer not to be able to discern other, lower luminance areas with lower contrast levels.

According to one aspect of the present invention, an image processing method as defined in claims 1 to 9 is provided.

According to another aspect of the present invention, an image processing apparatus as defined in claim 10 or 11 is provided.

Further features of the present invention will become apparent from the following description of exemplary embodiments (with reference to the attached drawings).

BRIEF DESCRIPTION OF THE DRAWINGS

FIG. 1 is a block diagram showing an example of a hardware configuration of an image processing apparatus according to the present invention.

FIG. 2 is a block diagram showing a detailed configuration of an image processing unit 104 shown in FIG. 1.

FIGS. 3A and 3B show histograms of pixel values in two X-ray image frames.

FIGS. 4A and 4B show characteristics of merged tone conversion curves.

FIG. 5 is a graph illustrating a feedback coefficient according to the present invention.

FIG. 6 is a flowchart showing image processing in a First Embodiment.

FIGS. 7A and 7B are graphs showing merged tone conversion curves and feedback coefficients in a reference region.

FIG. 8 is a schematic diagram showing a process of merging tone conversion curves based on the feedback coefficient.

FIG. 9 is a flowchart showing image processing in a Second Embodiment.

DESCRIPTION OF THE EMBODIMENTS

Hereinafter, embodiments for implementing the invention will be described in detail with reference to the drawings. In the embodiments, a method will be described for creating an image in which sensitivity to contrast variation is suppressed in a region being observed by setting a feedback coefficient for the region being observed to a large value, and in which contrast variation is reflected (i.e. is taken account of) in the remaining region by setting the feedback coefficient for the remaining region to a small value. By "reflected", what is meant is that the contrast variation is somehow acknowledged in the non-reference region. For instance, if display processing is completed, the contrast variation is displayed and thus the contrast variation that has occurred is reflected in the display. On the other hand, if full display processing is not performed and only internal processing is performed that does not give rise to a display, the contrast variation is calculated and taken account of in the processing of the merged tone conversion curve.

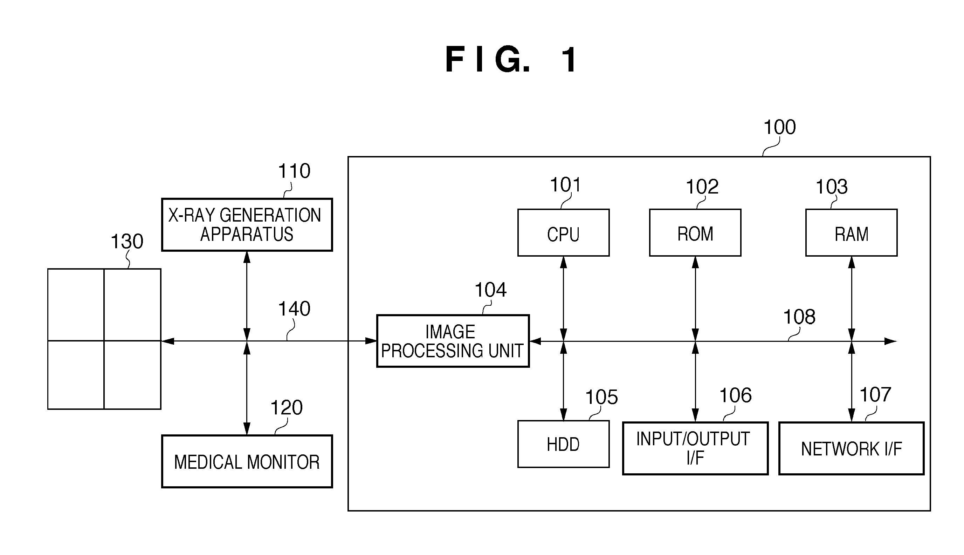

Firstly, an example of the hardware configuration of an image processing apparatus according to the present invention will be described using FIG. 1. The example shown in FIG. 1 is a configuration in the case of realizing the image processing apparatus on a personal computer (PC). As shown in FIG. 1, an image processing apparatus 100 includes a Central Processing Unit, CPU 101; a Read-Only Memory, ROM 102; a Random-Access Memory, RAM 103; an image processing unit 104; a hard disk drive, HDD 105; an input/output interface, I/F 106 and a network interface, I/F 107. The constituent elements 101 to 107 are connected via a system bus 108. The CPU 101 controls the overall apparatus in accordance with computer programs stored in the ROM 102, the HDD 105, and the like. The ROM 102 is a memory that stores startup programs, control data, and the like. The RAM 103 is a memory in which programs are developed when the CPU 101 executes processing, with various tables, a work region, and the like, being defined.

The image processing unit 104 performs image processing such as tone conversion (detailed later) on input X-ray images. In FIG. 1, the image processing unit 104 is implemented as a dedicated image processing board, but may be realized as a software module. In other words, the image processing unit 104 may be appropriately implemented depending on purpose. The HDD 105 stores an operating system (OS), application software and the like. The input/output I/F 106 is an interface with an output apparatus such as a display and an input apparatus such as a keyboard or a mouse. The network I/F 107 is an interface with an external network such as local area network (LAN).

The image processing unit 104 is connected to a network 140 of the X-ray imaging system. This network 140 may constitute a control area network (CAN), or it may constitute an optical fibre. An X-ray generation apparatus 110, a medical monitor 120 and an X-ray sensor (planar detector) 130 are connected to the network 140. Further, a picture archiving and communication system (PACS) and an intra-modality hard disk apparatus for storing X-ray images may also be connected to the network 140. Imaging of an object may be controlled by issuing commands from the image processing unit 104 to the X-ray generation apparatus 110 or to the X-ray sensor 130 in the X-ray imaging system.

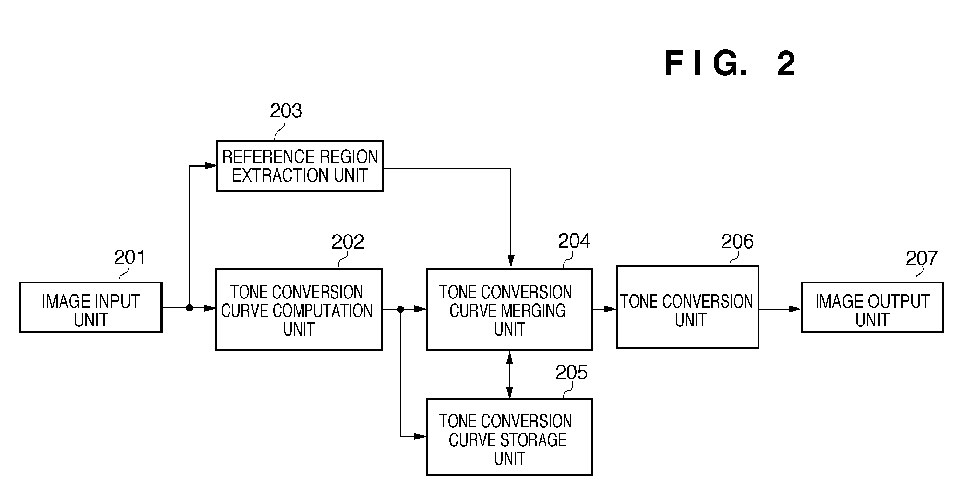

Next, the detailed configuration of the image processing unit 104 shown in FIG. 1 will be described using FIG. 2. The image processing unit 104 includes an image input unit 201, a tone conversion curve computation unit 202, a reference region extraction unit 203, a tone conversion curve merging unit 204, a tone conversion curve storage unit 205, a tone conversion unit 206, and an image output unit 207. The image input unit 201 inputs an X-ray image to be processed, and performs processing required leading up to the process of tone conversion (discussed later). Here, required processing involves, for example, correcting X-ray sensor characteristics or correcting system characteristics. The image input unit 201 also performs image enhancement and processing to suppress random noise as necessary.

The tone conversion curve computation unit 202 computes a tone conversion curve for performing tone conversion on the X-ray image processed by the image input unit 201. The reference region extraction unit 203 extracts "a region to be closely observed" for the tone conversion curve merging unit 204 to refer to when merging tone conversion curves. The tone conversion curve merging unit 204 merges the tone conversion curve of the previous frame and the tone conversion curve of the current frame. The tone conversion curve storage unit 205 saves the tone conversion curve merged by the tone conversion curve merging unit 204. This merged tone conversion curve storage unit 205 may be located in the RAM 103.

The tone conversion unit 206 performs tone conversion on the input X-ray image, using the tone conversion curve merged by the tone conversion curve merging unit 204. The image output unit 207 performs required processing on the processed image, and outputs the image to the medical monitor 120, the hard disk apparatus, or the like. Here, "required processing" may involve, for example, monitor gamma conversion, geometric conversion, or the like.

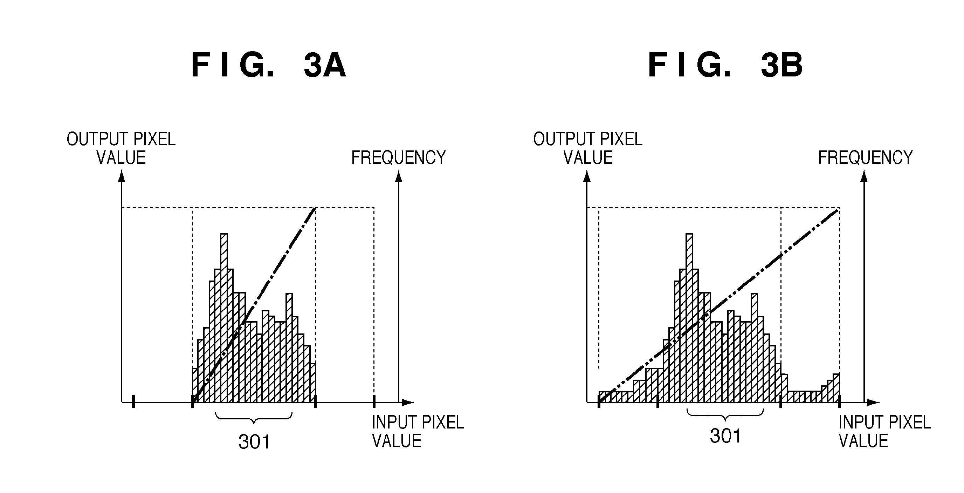

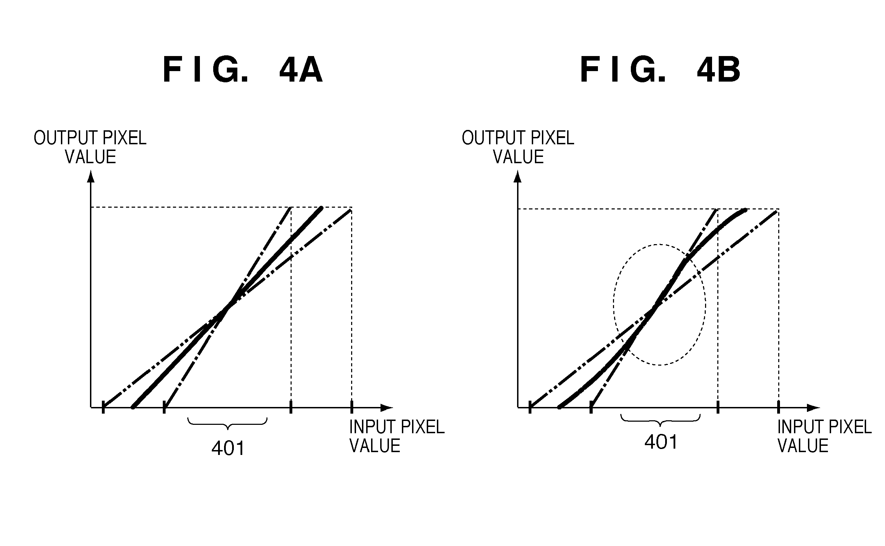

The specific processing of the image processing unit 104 in the above configuration will be described using FIGS. 3A and 3B and FIGS. 4A and 4B. FIG. 3A is a histogram of pixel values in an N-1th image or frame of an X-ray image series. By "series", what is meant is either a sequence of frames that are taken sequentially in time, or a plurality of frames taken simultaneously. Yet alternatively, the series of frames could be several frames that have been extracted from a single X-ray image, the several frames having different levels of luminance or intensity for the pixels in the image. For example, if the object being X-rayed has moved during the exposure of the X-ray, a series of frames may usefully be extracted from the image that have different intensity levels.

The dashed and dotted line of FIG. 3A indicates the optimal or linear tone conversion curve for this histogram. Here, "optimal" refers to the histogram range being distributed over the entire output range. The output range is the range of pixel values making up the image that is output of the image output unit 207 and may be missing maximum and minimum value input pixels, as will be discussed later.

FIG. 3B is a histogram of pixel values in an Nth frame of the X-ray image sequence. As can be seen from FIGS. 3A and 3B, the range of the histogram along the x-axis (input pixel value) changes in the Nth frame relative to the N-1th frame due to variation in available input pixel value caused by variation in the object, injection of contrast dye or the like. Because the range of input pixel values depends on the luminance of the light received by the X-ray sensor 130, the change in range of the input pixel value is more likely to be caused by object variation than X-ray variation as discussed above. The optimal or linear tone conversion curve for this histogram is as shown by the dashed and double-dotted line. Note that in FIGS. 3A and 3B, reference numeral 301 denotes the region, such as an internal organ, being closely observed.

Here, contrast in each frame is determined by the gradient of the tone conversion curve. The gradient of the tone conversion curve decreases and contrast is reduced when changing from the N-1th frame to the Nth frame, as a result of taking into account variation of luminance in the object being X-rayed. By "taking into account" the variation in the object between the N-1th frame and the Nth frame, several alternatives are understood. Comparing FIGS. 3A and 3B, the maximum and minimum input pixel values (i.e. those with low and high values that occur less frequently) of the N-1th image are not present. These values may either not exist in the first place because of the lack of high-contrast objects such as contrast dye, or because of the settings of the X-ray sensor 130, or the (luminance or intensity) pixel values may be clipped below and above a certain threshold during the processing of the image. The threshold may be set to remove dark patches or particularly bright patches caused by metal implants, for instance. However it is that the images are shot and processed, the result in the present embodiment is that the gradient of output pixel value over input pixel value is steeper for the first image (N-1) than for the second image (N), the latter of which does take into account all input pixel values (i.e. even pixels that have higher and lower values) .

In view of this, in the conventional technology shown in FIG. 4A, a merged tone conversion curve (solid line) is created by taking an average of the N-1th and Nth frame tone conversion curves. The way this averaging is performed practically is that the maximum and minimum pixel values in the histogram of FIG. 3B are fed back to the image input unit 201 and the averaging is performed taking these values into account for the output of the Nth image.

However, even with this merged tone conversion curve shown by the solid line, image flicker in a region 401 being closely observed is noticeable.

In view of this, the contrast of the N-1th frame is maintained in the region 401 being closely observed by weighting the merged tone conversion curve to approximate more closely the tone conversion curve of the N-1th frame in that region 401, as shown in FIG. 4B. The less distinct contrast in this region is thus more visible to the viewer. Further, the contrast of the Nth frame is displayed in the region outside the closely observed region 401 by weighting the merged tone conversion curve to approach the tone conversion curve of the Nth frame as the distance from the region 401 increases. In this way, larger extremes in contrast, such as that caused by contrast dyes, may be seen in the region outside the closely observed region.

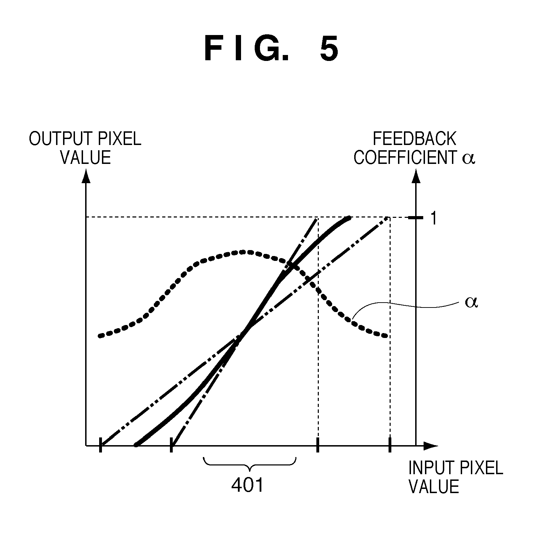

A way that this might be done is by obtaining contrast values for a plurality of pixels in the N-1th frame; obtaining

contrast values for a plurality of pixels in the $N^{th}$ frame; and effectively generating a third frame that contains the contrast values of the plurality of pixels of the $N^{th}$ frame in the reference region of the third frame and the contrast values of the plurality of pixels of the $N-1^{th}$ frame in a region other than the reference region. However, in order to obtain a smoother transition between the contrast values in the reference region and outside the reference region, it is preferable to have a tone conversion curve in the third frame that is not necessarily exactly the same as the tone conversion curve of the $N-1^{th}$ frame in the reference region, but approaches it; and that is not exactly the same as the tone conversion curve of the $N^{th}$ frame outside the reference region, but that approaches it or that curves gradually between the two contrast value gradients. This is done by multiplying an average of the tone conversion curves of the $N-1^{th}$ and $N^{th}$ frames (shown as the solid line in FIG. 4A) by a third curve (dotted line in FIG. 5) that makes the desired adjustment to the third frame's tone conversion curve. This third curve is known as a feedback coefficient $\alpha$.

More specifically, the feedback coefficient $\alpha$ is set as shown in FIG. 5. Here, the feedback coefficient $\alpha$ is set so that when it is multiplied by the average of the tone conversion curves of the $N-1^{th}$ and $N^{th}$ frames, the resultant merged tone conversion curve approaches the tone conversion curve of the $N-1^{th}$ frame the larger the value of $\alpha$, and approaches the tone conversion curve of the Nth frame the smaller its value as shown in FIG. 4B. This feedback coefficient $\alpha$ will be further discussed later. It is thereby possible to suppress image flicker in the region 401 being closely observed but to reflect variation in contrast over the image as a whole.

The feedback coefficient $\alpha$ is chosen by the tone conversion curve computation unit 202 so as to give the desired resultant tone curve. It preferably has a maximum at the reference region (the region being closely observed) and a minimum outside this region. This will be discussed in detail below.

First Embodiment

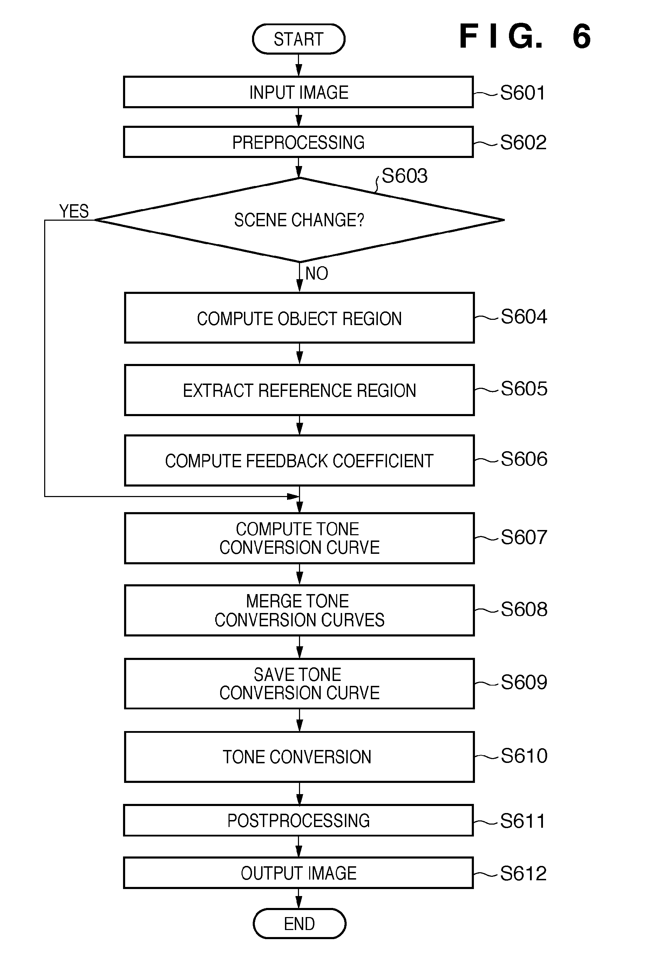

Image processing in a First Embodiment to acquire an X-ray image from the X-ray imaging system and perform tone conversion on the X-ray image will be described using FIG. 6. Firstly, an X-ray image to undergo tone conversion is input from the X-ray system by the image input unit 201 (S601). Next, correction that takes into account the characteristics of the X-ray sensor 130 and the characteristics of the X-ray system is performed as preprocessing (S602). Correcting the characteristics of the X-ray sensor 130 may involve performing offset correction, defect correction, or the like. Correcting the characteristics of the X-ray system may involve performing modulation transfer function (MTF) improvement, grid line correction, or the like. Also, a noise suppression process for suppressing random noise or system noise, and an enhancement process for enhancing edges or the like is performed as necessary, besides correcting the characteristics of the X-ray sensor 130 and the system characteristics.

Here, the preprocessed X-ray image is an original image. Scene change detection is then performed (S603) Here, a scene change is where the object being X-rayed changes or where the observation region being closely observed changes between frames. A scene change is also detected in the case where the brightness of the image is unstable due to X-ray manipulation or the like. As for the detection method, a scene change is detected if the average brightness of the entire image exceeds a prescribed threshold, or if variation in the X-ray tube voltage or tube current exceeds a prescribed threshold. Here, if there is a scene change, the processing proceeds directly to S607. On the other hand, if there is not a scene change, the processing proceeds to S604, and an object region is extracted from the original image by the reference region extraction unit 203.

In S604, firstly, regions outside a treatment field or where there is no object are detected from the original image, and the remaining region is recognized as the object region. Methods for recognizing the treatment field include a method that involves deriving a profile and calculating differential values, and a method using neural networks. On the other hand, the method for detecting regions where there is no object may involve creating a histogram of pixel values and performing detection based on the brightness values of the pixels. The object region may thus be extracted using these methods. Apart from performing detection of regions outside the treatment field and where there is no object, recognition of the object region can be performed after the removal of artefacts from the image that may arise from implanted metal, etc. in the object as necessary. Such artefacts may be determined by high brightness value of pixels in the area showing the implanted metal or other reflective/high density material. The very bright pixel values in the histogram may thus be extracted to remove these types of image artefact. The extraction process based on pixel brightness may thus give rise to a histogram shape as shown in FIG. 3A.

Next, a reference region is extracted based on the extracted object region (S605). Here, the reference region is the region to be closely observed 301, 401. An anatomical element such as the representation in image form of an internal organ may be used to specify this reference region. In the First Embodiment, imaging region information (i.e. information regarding a desired region in the image) is used to specify the anatomical element. A histogram is created representing pixel values of the object region, and the reference region is determined based on the imaging region information and the shape of the histogram. For example, in the case of imaging the abdominal region, this region can be divided broadly into the intestines, organs other than the intestines, bone and the remaining region. Accordingly, automated discrimination analysis is applied to the histogram to divide the histogram into four regions, and allocate the anatomical structures mentioned each to a region. The histogram range allocated to the intestine, which is in this example the region to be focused on the most, is determined as the reference region.

Note that imaging technique information (i.e. information regarding an imaging technique) may be used in addition to the anatomical element defined above when extracting the reference region. In that case, a histogram is created that represents pixel values of the object region, and the reference region is determined based on the imaging technique information and the shape of the histogram. For example, in the case of performing the imaging technique of renal angiography, this region can be broadly divided into the renal vessel, the kidney, organs other than the kidney, and the remaining region. Accordingly, automated discrimination analysis is applied to the histogram to divide the histogram into five regions, and allocate the anatomical structures each to a region. Because the reference region is dependent on the imaging technique being used (in this case, renal angiography), the reference region is determined as being a region that is relevant to angiography. Therefore, the histogram range allocated to the renal vessel and the kidney, which are the regions to be focused on the most in angiography, is then determined as the reference region.

Alternatively, a statistical element may be used when extracting the reference region. A histogram, for example, is created as the statistical element, and the region between the 40% and 60% points of a cumulative histogram may be determined as the reference region in that histogram. Alternatively, the region between the 40% and 60% points of the histogram range itself may be determined as the reference region.

An example of a statistical element being used when extracting the reference region is described as follows. A prescribed ROI (region of interest) containing the centre of an object region may be used as the statistical element. For example, a rectangular ROI N*N containing the centre of the object region is set, and a histogram of pixel values within the ROI is computed. The region between the 40% and 60% points of a cumulative histogram of the histogram within the ROI is determined as the reference region. Alternatively, a prescribed pixel range may be determined as the reference region based on the centre pixel of the reference region, with the average value in the abovementioned ROI as the centre pixel.

Next, a feedback coefficient is computed with respect to the obtained reference region (S606). This feedback coefficient may be a function in which the feedback coefficient reaches its maximum value within the reference region, as shown in FIG. 5. Specifically, the feedback coefficient may be approximated by a cubic function such as equation 1 below, where $\alpha_{min}$ is the minimum value of the feedback coefficient, x is a current pixel value for the feedback coefficient at the corresponding point, $x_{max}$ is the maximum pixel value in the original image, and $x_{basis}$ is the pixel value of the original image at which the feedback coefficient reaches its maximum value within the reference region. k is a weighted coefficient dependent on the distance from the reference region.

$$x \le x_{basis} : \quad \alpha = k_1 x^3 + k_2 x^2 + k_3 x + \alpha_{min}$$

$$x > x_{basis} : \quad \alpha = k_1 (x_{max} - x)^3 + k_2 (x_{max} - x)^2 + k_3 (x_{max} - x) + \alpha_{min} \quad\quad (1)$$

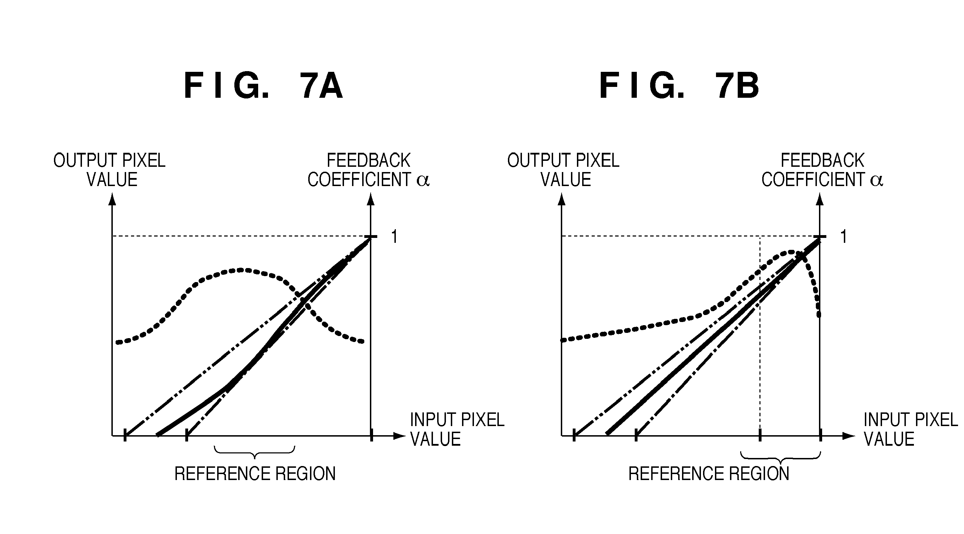

$x_{basis}$ is determined as being an intermediate point in the reference region range or the 50% point of the cumulative histogram in the reference region range. The function of equation 1 can be used for variation in contrast such as shown in FIG. 7A, but cannot be applied to variation in contrast such as shown in FIG. 7B. The function of the feedback coefficient in the case shown in FIG. 7B is computed by performing approximation by spline interpolation, polynomial interpolation, or alternatively an N-dimensional function, based on the minimum value $\alpha_{min}$ and maximum value $\alpha_{max}$ of the feedback coefficient. According to the present embodiments, in order to determine a present tone conversion curve, a previous tone conversion curve is used as described above. In order to ensure that the change of contrast from the previous image to the current image is recognisable in the region of the image outside the reference region but suppressed in the reference region, the maximum feedback coefficient value $\alpha_{max}$ is desirably 0.5 or more.

Next, a tone conversion curve is computed by the tone conversion curve computation unit 202 (S607) Here, a basic shape to serve as the basis of the tone conversion curve, such as a straight line or a sigmoid function is determined in advance. The tone conversion curve is computed such that the object region computed at S604 is allocated to the abovementioned basic shape.

Next, the tone conversion curve merging unit 204 merges the saved past tone conversion curve of one frame previous and the new tone conversion curve computed at S607 for each pixel value of the original image, based on the feedback coefficient computed at S606 (S608), thus effectively creating a third frame containing the merged tone curve applied to each pixel value of the original image.

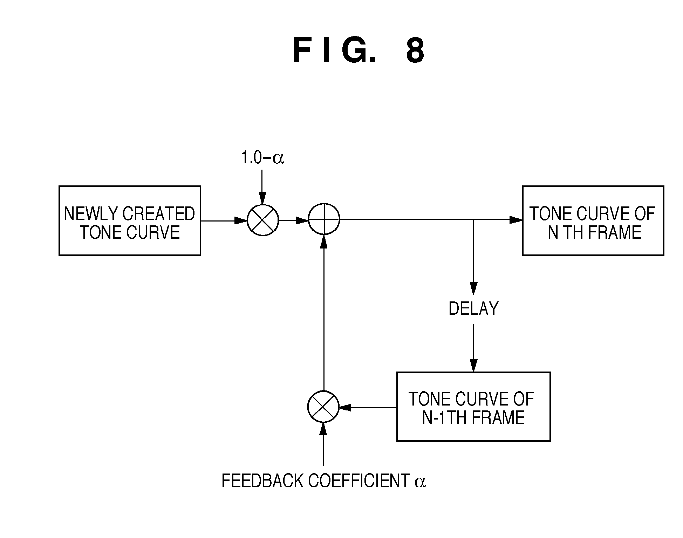

FIG. 8 shows the process of merging tone conversion curves based on the feedback coefficient. The newly created tone curve for the Nth frame is multiplied by 1-$\alpha$ and the tone curve of the N-1th frame is multiplied by $\alpha$. These

two products are added together to give rise to a merged tone conversion curve. The merged tone conversion curve $Tc_{merge}$ is represented by equation 2 below, where $Tc_{new}$ is the new ($N^{th}$ frame) tone conversion curve, $Tc_{old}$ is the past ($N-1^{th}$ frame) tone conversion curve, and x is a pixel value of the original image. Note that in the case where a past tone conversion curve does not exist for the first frame, the new tone conversion curve is computed with $\alpha(x) = 0$. The new tone conversion curve is also computed with $\alpha(x) = 0$ if a scene change is detected at S603.

$$TC_{merge}(x) = \alpha(x) TC_{old}(x) + (1 - \alpha(x)) TC_{new}(x) \qquad (2)$$

Next, the tone conversion curve merged by the tone conversion curve merging unit 204 is saved to the tone conversion curve storage unit 205 (S609). The tone conversion unit 206 performs tone conversion on the original image using the merged tone conversion curve (S610). Here, postprocessing is performed as necessary prior to outputting the image (S611). Note that postprocessing may involve bit conversion, geometric conversion, or P value conversion. Processing such as monitor gamma conversion is also performed when outputting the image to the medical monitor 120.

Finally, the image output unit 207 outputs the image that has undergone tone conversion at S610 and postprocessing at S611 to the medical monitor 120, the HDD 105, the intra-modality hard disk apparatus, or the like (S612).

According to the First Embodiment, the image can be stabilized in the region being closely observed, and an image that reflects the variation in contrast over the entire image or image series can be created. Practically, for example, an image is created that is limited by a predefined range of pixel intensity or luminosity. This limited range is used to show a large range of pixel intensities (i.e. from very dark to very bright) in a region outside a region of interest, but within the region of interest, a smaller range of pixel intensities (excluding extremes of intensity) "spread out" over the same, limited, predefined range to make the contrast (i.e. difference between brightnesses) clearer to see. For example, bright artefacts will be visible outside of the region of interest as bright pixels, but in the region of interest, the extreme brightness will not be seen and more subtle features will be able to be made out by the viewer's eye. As a result, visibility can be enhanced, leading to improvements in the diagnostic accuracy and surgical accuracy of physicians.

Second Embodiment

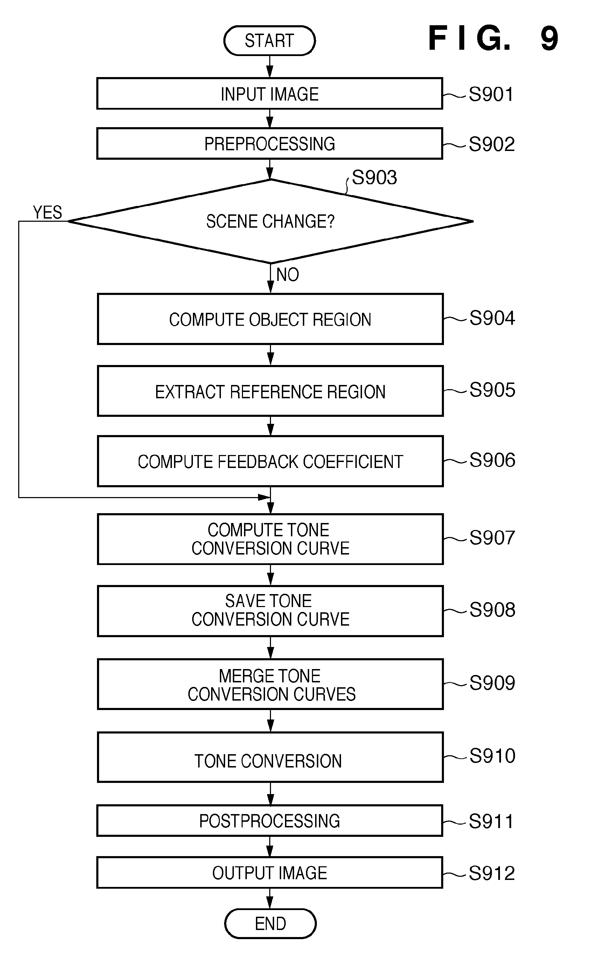

Next, a Second Embodiment according to the present invention will be described with reference to the drawings. In the First Embodiment, a past tone conversion curve and a new tone conversion curve were merged based on a feedback coefficient, and the merged tone conversion curve was then saved, but in the Second Embodiment, the tone conversion curves are saved before being merged as shown by the reversal of steps S908 and S909 of FIG. 9 as compared with the steps S608 and S609 of FIG. 6.

The configurations of the image processing apparatus and the X-ray imaging system in the Second Embodiment are the same as the configurations in the First Embodiment shown in FIGS. 1 and 2, and description thereof will be omitted. Here, image processing in the Second Embodiment to acquire an X-ray image from the X-ray imaging system and perform tone conversion on the X-ray image will be described using FIG. 9. Note that the processing of S901 to S907 and S910 to S912 shown in FIG. 9 is the same as the processing of S601 to S607 and S610 to S612 shown in FIG. 6. Accordingly, the processing of S908 and S909 will be described.

The tone conversion curve computation unit 202 saves the new tone conversion curve computed at S907 to the tone conversion curve storage unit 205 (S908). Here, the saved new tone conversion curve equates to the tone conversion curve before being merged. Next, the new tone conversion curve computed at S907 and past tone conversion curves that have been saved are merged based on the feedback coefficient computed at S906 (S909).

Here, a merged tone conversion curve $Tc_{merge}$ is represented by equation 3 below, where $Tc_{new}$ is the new tone conversion curve, $Tc_{oldmerge}$ is the combination of past tone conversion curves, and x is a pixel value of the original image.

$$TC_{merge}(x) = \alpha(x) TC_{oldmerge}(x) + (1 - \alpha(x)) TC_{new}(x)$$

$$TC_{oldmerge}(n) = k TC_{old}(n-1) + (1-k) TC_{old}(n-2) \qquad (3)$$

$Tc_{old}(n-1)$ is the tone conversion curve computed at S907 in the $n-1^{th}$ frame. Tone conversion curves created at S907 in the past are merged, and the resultant (past) tone conversion curve is merged as $Tc_{oldmerge}(n)$.

Other Embodiments

Aspects of the present invention can also be realized by a computer of a system or apparatus (or devices such as a CPU (Central Processing Unit) or MPU (Microprocessor unit)) that reads out and executes a program recorded on a memory apparatus to perform the functions of the above-described embodiment(s), and by a method, the steps of which are performed by a computer of a system or apparatus by, for example, reading out and executing a program recorded on a memory apparatus to perform the functions of the above-described embodiment(s). For this purpose, the program is provided to the computer for example via a network or from a recording medium of various types serving as the memory apparatus (e.g., computer-readable medium).

While the present invention has been described with reference to exemplary embodiments, it is to be understood that the invention is not limited to the disclosed exemplary embodiments, but to include all such modifications and equivalent structures and functions as fall within the scope of the claims.

**Claims**

1.  An image processing method for performing tone conversion on an image from an image series generated by an X-ray imaging system, **characterised by** comprising:

    an extraction step (S605) of extracting, from a first image of the image series, a region that is to serve as a reference region (301) in other images in the image series; and
    a tone conversion step (S610) of performing tone conversion, in a case where there is a variation in contrast in a second image with respect to the first image in the image series, so as to suppress the variation in contrast resulting between the first image and the second image in the reference region, and so as to take account of the variation in the contrast in a region other than the reference region.

2.  The image processing method according to claim 1, further comprising:

    a first obtaining step of obtaining contrast values for a plurality of pixels in the first image (Fig. 3A); and
    a second obtaining step of obtaining contrast values for a plurality of pixels in the second image (Fig. 3B), wherein the tone conversion step (S610) comprises generating a third image (Fig. 4B) that contains contrast values approaching the contrast values of the plurality of pixels of the second image in the reference region (401) and contrast values approaching the contrast values of the plurality of pixels of the first image in a region other than the reference region.

3.  The method according to claim 2, wherein the generation of the third image comprises:

    a step of obtaining a tone conversion curve for the first image;
    a computing step (S607) of computing a tone conversion curve for the second image;
    a merging step (S608) of merging the tone conversion curves for the first and second images along with a feedback coefficient ($\alpha$) to obtain a merged tone conversion curve to generate the third image.

4.  The method according to claim 3, wherein the feedback coefficient ($\alpha$) comprises a multiplier that is weighted in dependence on a distance from the reference region.

5.  The method according to claim 3 or 4, wherein the feedback coefficient ($\alpha$) is calculated according to the following equations:

$$x \leq x_{basis} \; : \; \alpha \; = \; k_1 x^3 + k_2 x^2 + k_3 x + \alpha_{min}$$

$$x > x_{basis} \; : \; \alpha \; = \; k_1 (x_{max} - x)^3 + k_2 (x_{max} - x)^2 + k_3 (x_{max} - x) + \alpha_{min}$$

wherein x is an input pixel value, $x_{basis}$ is an intermediate pixel in the reference region, $x_{max}$ is a maximum pixel value in the original image, $\alpha_{min}$ is a minimum feedback coefficient value and k is a weighting coefficient that is weighted according to the distance of x from $x_{basis}$.

6. The method according to claim 1, further comprising:

a merging step (S608) of merging a tone conversion curve of the first image of the image series and a tone conversion curve of the second image based on a feedback coefficient ($\alpha$) that is set (S606) to a larger value for the reference region (301) than for the region other than the reference region, wherein, in the tone conversion step (S610), the tone conversion is performed using a merged tone conversion curve merged in the merging step (s608).

7. The method according to any one of claims 1 to 6, wherein the reference region (301) is a region of an image containing an image of an anatomical region of interest.

8. The method according to any one of claims 1 to 6, wherein the position of the reference region is determined by imaging region information or imaging technique information.

9. The method according to any one of claims 1 to 6, wherein the reference region is a region determined using a statistical element.

10. An image processing apparatus (100) for performing tone conversion on an image of an image series generated by an X-ray imaging system (110,120,130,140), **characterised by** comprising:

extraction means (203) for extracting a region from a first image that is to serve as a reference region (301) in images in the image series; and
tone conversion means (206) for performing tone conversion, in a case where there is a variation in contrast in a second image compared to the first image, so as to suppress the variation in contrast in the reference region, and so as to take account of the variation in the contrast in a region other than the reference region.

11. The image processing apparatus (100) according to claim 10, further comprising:

obtaining means (202) for obtaining contrast values for a plurality of pixels in the first image (Fig. 3A) and for obtaining contrast values for a plurality of pixels in the second image (Fig. 3B), wherein
the tone conversion means (206) is configured to generate a third image (Fig. 4B) that contains contrast values approaching the contrast values of the plurality of pixels of the second image in the reference region (401) and contrast values approaching the contrast values of the plurality of pixels of the first image in a region other than the reference region.

12. A computer program which, when run on a computer, causes the computer to execute an image processing method according to any of claims 1 to 9.

# F I G. 1

# F I G. 2

# F I G. 3A

# F I G. 3B

# FIG. 4A

OUTPUT PIXEL
VALUE

INPUT PIXEL
VALUE

401

# FIG. 4B

OUTPUT PIXEL
VALUE

INPUT PIXEL
VALUE

401

# F I G.  5

OUTPUT PIXEL
VALUE

FEEDBACK
COEFFICIENT α

1

α

401

INPUT PIXEL
VALUE

FIG. 6

START

INPUT IMAGE ～S601

PREPROCESSING ～S602

SCENE CHANGE? ～S603

YES

NO

COMPUTE OBJECT REGION ～S604

EXTRACT REFERENCE REGION ～S605

COMPUTE FEEDBACK COEFFICIENT ～S606

COMPUTE TONE
CONVERSION CURVE ～S607

MERGE TONE
CONVERSION CURVES ～S608

SAVE TONE
CONVERSION CURVE ～S609

TONE CONVERSION ～S610

POSTPROCESSING ～S611

OUTPUT IMAGE ～S612

END

FIG. 7A

FIG. 7B

# F I G.  8

1.0−α

```
NEWLY CREATED          ⊗ ──→ ⊕ ──────────────→   TONE CURVE OF
TONE CURVE                                        N TH FRAME
                                    │
                                    ▼
                                  DELAY
                                    │
                                    ▼
              ⊗ ←──────────────   TONE CURVE OF
              ▲                   N-1TH FRAME
              │
      FEEDBACK COEFFICIENT α
```

# FIG. 9

START

INPUT IMAGE ~ S901

PREPROCESSING ~ S902

S903
SCENE CHANGE?

YES

NO

COMPUTE OBJECT REGION ~ S904

EXTRACT REFERENCE REGION ~ S905

COMPUTE FEEDBACK COEFFICIENT ~ S906

COMPUTE TONE
CONVERSION CURVE ~ S907

SAVE TONE
CONVERSION CURVE ~ S908

MERGE TONE
CONVERSION CURVES ~ S909

TONE CONVERSION ~ S910

POSTPROCESSING ~ S911

OUTPUT IMAGE ~ S912

END

**EP 2 267 655 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3334321 B

- JP 4050547 B